# EUROPÄISCHE PATENTSCHRIFT

(11) **EP 0 764 669 B1**
(45) Veröffentlichungstag und Bekanntmachung des Hinweises auf die Patenterteilung: **02.06.1999**
(21) Anmeldenummer: 96114804.6
(22) Anmeldetag: 16.09.1996
(51) Int. Cl.: C08G 12/42, C08G 12/40, C08L 61/28, C08L 61/32, D21H 17/51

(54) **Elastifizierte Melaminharze**
Elasticized melamine resins
Résines de mélamine élastifiées

(30) Priorität: 22.09.1995 DE 19535255
(43) Veröffentlichungstag der Anmeldung: 26.03.1997
(73) Patentinhaber: BASF AKTIENGESELLSCHAFT, 67056 Ludwigshafen (DE)
(72) Erfinder: Utecht, Jens, Dr., 68809 Neulussheim (DE); Niessner, Manfred, Dr., 67105 Schifferstadt (DE); Kirchgässner, Uwe, Dr., 67227 Frankenthal (DE); Wittmann, Otto, 67227 Frankenthal (DE); Decher, Jakob, 67240 Bobenheim-Roxheim (DE); Jäckh, Christof, Dr., 69120 Heidelberg (DE); Meier, Anton, Dr., 67134 Birkenheide (DE)

(56) Entgegenhaltungen:
- EP-A- 0 206 723
- EP-A- 0 408 947
- DE-A- 2 609 696
- DE-A- 2 637 424
- FR-A- 2 298 562
- US-A- 2 444 802

## Beschreibung

Die vorliegende Erfindung betrifft elastifizierte Melaminharze aus.
a) Melamin (Komponente a)
b) 1,4 bis 2,0 mol Formaldehyd pro Mol Melamin (Komponente b)
c) 0,5 bis 20 Gew.-%, bezogen auf die Gesamtmenge der Komponenten (a) und (b) eines Adduktes (c) aus
   c1) einem Alkalisulfit, Alkalihydrogensulfit oder Alkalidisulfit und
   c2) pro Mol Schwefel in der Kompnente (C1) 1 bis 100 mol eines C₂- bis C₄-Oxirans,
   wobei die bei der Bildung des Adduktes (c) entstehende Hydroxylgruppe mit einem C₁- bis C₂₀-Alkyl-,einem C₅- bis C₂₀-Cycloalkyl-, einem C₆-bis C₁₅-Aryl oder einem C₇- bis C₂₀-Aralkylrest verethert sein kann und
   d) 0 bis 0,5 mol einer weiteren Verbindung (Komponente d), die fähig ist, mit Formaldehyd in einer Polykondensations- oder -additionsreaktion zu reagieren pro Mol Melamin.

Weiterhin betrifft die Erfindung Verfahren zu deren Herstellung, deren Verwendung zur Imprägnierung von Papieren, Melaminharz-Imprägnate, die unter Verwendung der Melaminharze hergestellt wurden sowie mit diesen Melaminharz-Imprägnaten beschichtete Werkstoffe.

Melaminharze aus Melamin und Formaldehyd sind allgemein bekannt, beispielsweise aus Kunststoff-Handbuch, 2.Auflage, 1988, Band 10, S. 41 bis 49.

Häufig stellt man aus ihnen durch Imprägnierung von Papier Melaminharz-Imprägnate her, die u.a. zur Beschichtung von Holzwerkstoffen in der Möbelindustrie Verwendung finden. Durch das Beschichten mit Melaminharz-Imprägnaten erhalten solche Holzwerkstoffe eine Oberfläche, die eine höhere Widerstandsfähigkeit gegenüber mechanischer Beanspruchung aufweist und die relativ unempfindlich gegenüber Chemikalien und Feuchtigkeit ist. Möbel teile, bei denen die mechanische Beanspruchung sehr hoch ist, z.B. Arbeitsplatten von Küchenmöbeln, werden geeigneterweise aus Holzwerkstoffen hergestellt, die mit Melaminharz-Imprägnaten beklebt sind, die aus mehreren Papierlagen aufgebaut sind. Zur Herstellung von Möbelteilen, die weniger stark beansprucht werden, reicht es im allgemeinen aus, die Holzwerkstoffe mit einlagigen Melaminharz-Imprägnaten zu beschichten. Die Beschichtung erfolgt dabei üblicherweise nach dem sog. Kurztaktverfahren, bei dem die Holzwerkstoffe in Kurztaktpressen mit Preßzeiten von ca. 10 bis 60 sec und Drücken von 15 bis 30 bar mit den Melaminharz-Imprägnaten verpreßt werden.

In verarbeitungstechnischer und wirtschaftlicher Hinsicht und im Hinblick auf die wünschenswerten Eigenschaften der mit den Melaminharzen hergestellten Beschichtungen müssen dabei an die Melaminharze eine Reihe von Anforderungen gestellt werden, die bisher nicht in dem geforderten Maß erfüllt werden.

Was das Anforderungsprofil der verarbeitungstechnischen Eigenschaften betrifft, gehen die Anforderungen dahin, daß die Melaminharze folgende Eigenschaften aufweisen:
- Die Melaminharze sollen beim Imprägnieren des Papiers sowohl rasch und gleichmäßig eindiffundieren als auch einen hohen Feststoffgehalt aufweisen, damit für das Trocknen des Papiers möglichst wenig Energie benötigt wird.
- Auch nach längerer Lagerung sollen die Melaminharze gut "waschbar" sein, d.h. beim Verdünnen mit Wasser keine klebrige Klumpen bilden, sondern in eine feinteilige Dispersion oder Lösung übergehen. Eine gute Waschbarkeit ist deshalb wichtig, weil sie die leichte Reinigung von Transportbehältern und Verarbeitungsmaschinen ermöglicht.
- Bei der Verarbeitung der Melaminharze, z.B. bei der Imprägnierung der Papiere oder bei der Beschichtung der Holzwerkstoffe mit den imprägnierten Papieren, insbesondere wenn diese Arbeitsschritte wie üblich bei erhöhter Temperatur durchgeführt werden, sollen in möglichst geringem Umfang organische Verbindungen verdampft werden. Um aus Gründen des Umweltschutzes und der Arbeitshygiene zu vermeiden, daß diese Stoffe an die Luft abgegeben werden, sind im allgemeinen erhebliche Investitionen in Filter- oder Nachverbrennungsanlagen erforderlich.

An qualitativ hochwertige Beschichtungen und Oberflächen aus Melaminharzen werden in Kombination folgende Anforderungen gestellt:

Die aus den Melaminharzen hergestellten Imprägnate sollen eine gewisse Elastizität aufweisen, damit sich nach dem Kurztaktverfahren auch strukturierte Flächen von Holzwerkstoffteilen beschichten lassen, ohne daß es zu einer Rißbildung in den aufgepreßten Imprägnate kommt. Außerdem soll die Elastizität groß genug sein, damit Quellungs- und Schwundvorgänge im Holzwerkstoff, wie sie beispielsweise bei der Veränderung des Raumklimas auftreten können, ebenfalls nicht zu einer Oberflächenrißbildung führen.

Daneben ist es erwünscht, daß die beschichteten Holzwerkstoffe durch Feuchtigkeit, Wasserdampf und Chemikalien wie verdünnte Laugen und Säuren sowie organische Lösungsmittel möglichst wenig angegriffen werden. Voraussetzung hierfür ist, daß die Melaminharze bei der Verarbeitung, d.h. beim Trocknen der Imprägnate oder bei der Beschichtung der Holzwerkstoffe zu einem hochmolekularen Netzwerk aushärten.

Die mit den Imprägnaten beschichteten Holzwerkstoffe sollen eine geringe Anschmutzbarkeit aufweisen, d.h. daß sich Schmutz von der Oberfläche, ohne Rückstände zu hinterlassen, leicht entfernen lassen soll. Hierzu ist es erforderlich, daß die Oberfläche der Imprägnate möglichst wenig Fehlstellen wie Risse oder Poren aufweist, aus denen der Schmutz nur schwer zu entfernen ist.

Ferner sollen die Melaminharze auch die Herstellung von schwarzen oder farbigen Beschichtungen mit hoher Farbbrillanz erlauben. Da diese Farbeffekte durch Verwendung von entsprechend gefärbtem Papier erzielt werden, sollen die ausgehärteten Melaminharze nicht trüb sein und keine weißen Ausblühungen, die die Farben der Dekorpapiere grau oder trüb erscheinen lassen, aufweisen.

Ferner sollen sich die Beschichtungen hart und abriebfest sein und gegebenenfalls einen hohen Glanz aufweisen.

Die Entwicklung von Melaminharzen mit einer derartigen Eigenschaftskombination ist dadurch erschwert, daß den einzelnen anwendungstechnischen Eigenschaften divergierende strukturelle Eigenschaften zugrunde zu liegen scheinen. Während Glanz, Härte und Abriebfestigkeit der Beschichtungen eine gewisse Sprodigkeit voraussetzt, erfordert eine poren- und rißfreie Oberfläche eine gewisse Flexibilität und Elastizität.
Melaminharze für den genannten Zweck sind in der DE-A-26 37 424 beschrieben. Es wird zu deren Herstellung empfohlen, Melamin und Formaldehyd im Molverhältnis 1:1,5 bis 1:3,5 zu kondensieren und vor, während oder nach der Kondensation 0,5 bis 15 Gew.-% £-Caprolactam und Thioharnstoff sowie 0,25 bis 0,5 Gew.-% eines Hydrogensulfits oder Sulfits zuzusetzen.

Nachteilig an diesen Harzen ist, daß deren Verarbeitung aus arbeitshygienischer Sicht problematisch ist, da beim Trocknen der imprägnierten Papiere und bei deren Aufpressen auf die Holzwerkstoffe in erheblichem Umfang Substanzen, die die Luft verunreinigen, freigesetzt werden.

Die DE-A-25 02 168 beschreibt Melaminharze aus Melamin und pro Mol Melamin 1,3 bis 6 mol Formaldehyd sowie 0,1 mol eines Alkalisulfits-bisulfits-dithionits oder -formaldehydsulfoxylats. Diese Melaminharze sind zwar für die Herstellung von Imprägnaten für die Beschichtung von Holzwerkstoffen geeignet, jedoch läßt die Rißbeständigkeit noch zu wünschen übrig.

Weiterhin ist es aus DE-A-26 09 696 bekannt, Harzmischungen aus Melaminharzen und Polyalkoholen wie Diethylenglykol einzusetzten. Bei ihrer Weiterverarbeitung härten diese Harze oftmals nicht vollständig aus, was dazu führt, daß beschichtete Holzwerkstoffe, die unter Verwendung dieser Harzmischungen hergestellt wurden, noch keine genügend große Widerstandsfähigkeit gegenüber Lösungsmitteln und verdünnten Säuren und Laugen aufweisen.

Aus der nicht vorveröffentlichten deutschen Anmeldung P 4434605.0 (O.Z.0050/45231) sind wässerige Tränkharze, die ein Melaminharz und 0,1 bis 20 Gew.-%, bezogen auf das Melaminharz, eines wasserlöslichen oder wasserdispergierbaren alkoxilierten Polyamids enthalten, bekannt.

Aufgabe der war es deshalb, Melaminharze bereitzustellen, die die Mängel des Standes der Technik nicht aufweisen und das gewünschte Eigenschaftsprofil mit der beschriebenen Eigenschaftskombination aufweisen.

Demgemäß wurden die eingangs definierten elastifizierten Melaminharze gefunden.

Die erfindungsgemäßen elastifizierten Melaminharze sind hergestellt aus
a) Melamin (Komponente a)
b) 1,4 bis 2,0 bevorzugt 1,50 bis 1,66 mol Formaldehyd pro Mol Melamin (Komponente b)
c) 0,5 bis 20, bevorzugt 2 bis 6 Gew.-%, bezogen auf die Gesamtmenge der Komponenten (a) und (b) eines Adduktes (c) aus
   c1) einem Alkalisulfit Alkalihydrogensulfit oder Alkalidisulfit, wobei die Natrium- oder Kaliumsalze bevorzugt sind und
   c2) pro Mol Schwefel in der Komponente (C1) Alkalisulfit 1 bis 100, bevorzugt 1 bis 10, besonders bevorzugt 1 bis 4 mol eines C₂- bis C₄-Oxirans, wobei die bei der Bildung des Adduktes (c) entstehende Hydroxylgruppe mit einem C₁- bis C₂₀-, bevorzugt C₁- bis C₆-Alkyl- einem C₅- bis C₂₀-Cycloalkyl, bevorzugt Cyclohexyl- oder Cyclopentyl- einen C₆- bis C₁₅-Aryl, bevorzugt Phenyl oder einem C₇- bis C₂₀₋Aralkyl-, bevorzugt einem Benzylrest verethert sein kann und
d) 0 bis 0,5, bevorzugt 0 bis 0,1 mol einer weiteren Verbindung (Komponente d), die fähig ist, mit Formaldehyd in einer Polykondensations- oder -additionsreaktion zu reagieren, pro Mol Melamin.

Das Melamin (Komponente a) wird üblicherweise in fester Form eingesetzt.

Der Formaldehyd (Komponente b) wird bevorzugt in Form einer 30 bis 50 gew.-%igen wäßrigen Lösung oder in Form von Paraformaldehyd eingesetzt.

Bei dem Addukt (c) handelt es sich insbesondere um Verbindungen der allgemeinen Formel I 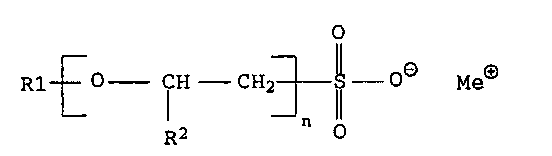 in der
- R¹: Wasserstoff, C₁- bis C₂₀-Alkyl, bevorzugt C₁ bis C₆-Alkyl, C₅- bis C₂₀-Cycloalkyl, bevorzugt Cyclopentyl oder Cycloheryl, C₆- bis C₁₅-Aryl, bevorzugt Phenyl, oder C₇- bis C₂₀-Alkyl, bevorzugt Benzyl,
- R²: unabhängig voneinander Wasserstoff, Methyl oder Ethyl
- Me⊕: ein Alkaliion, bevorzugt ein Kalium- oder Natriumion
- n: 1 bis 100, bevorzugt 1 bis 10, besonders bevorzugt 1 bis 4 bedeutet.

Die Addukte (c) werden im allgemeinen hergestellt, indem man ein Alkalisulfit, Alkalidisulfit oder ein Alkalihydrogensulfit mit einem entsprechenden C₂- bis C₄-Oxiran umsetzt, wobei der Oxiran-Ring geöffnet wird und das entsprechende Oxalkylat des Sulfits, das die entsprechende Hydroxy-C₂- bis -C₄-Alkylgruppe trägt, gebildet wird.

Die Hydroxylgruppe dieses Umsetzungsproduktes wird anschließend gegebenenfalls verethert.

Dabei kann man beispielsweise so vorgehen, daß man es mit einer Verbindung der Formel R¹-x umsetzt, in der x für eine Hydroxylgruppe, C1, Br oder I steht, Die Reaktionsbedingungen hierfür sind allgemein bekannt und beispielsweise in Lehrbüchern der organischen Chemie angegeben.

Als Komponenten (d) kommen vor allem solche in Betracht, die gegebenenfalls zusammen mit Formaldehyd bei der Herstellung von Aminoplastharzen eingesetzt werden (vgl. Ullmanns Encyklopädie der technischen Chemie, 4. Auflage, Band 7, S. 403 bis 422), also z.B. Harnstoff, Dicyandiamid und Guanamine wie Benzoguanamin und Acetoguanamin. Bisguanamine wie Adipo-, Glutaro- oder Methylolglutarobisguanamin sowie Verbindungen, welche mehrere, z.B. kondensierte Aminotriazin Kerne enthalten, sind ebenfalls geeignet.

Falls besonders hydrophile elastifizierte Melaminharze gewünscht werden, wird man den Anteil der Komponente (c) so wählen, daß er in der Nähe des oberen Grenzwertes des genannten Bereichs liegt. Um diese Eigenschaft noch stärker auszuprägen, ist es möglich, als Komponente (d) Alkalisulfite, Alkalidisulfite oder Alkalihydrogensulfite mit zu verwenden.

Zweckmäßigerweise erfolgt die Herstellung der elastifizierten Melaminharze entweder nach Methode I, bei der man:
Ia) eine wässerige Lösung oder Suspension enthaltend die Komponenten (a), (b) und gegebenenfalls (d) zu einem Ausgangsmelaminharz umsetzt und
Ib) das Ausgangsmelaminharz mit der Komponente (c) vermischt
   oder nach Methode II, bei der man
II) eine wäßrige Lösung oder Suspension enthaltend die Komponenten (a), (b), (c) und gegebenenfalls (d) umsetzt.

Die Umsetzung der Ausgangsverbindungen gemäß Schnitt Ia oder II zum Ausgangsmelaminharz bzw. zum elastifizierten Melaminharz erfolgt üblicherweise bei einem pH-Wert von 7 bis 10, bevorzugt von 8,5 bis 9,2 und einer Reaktionstemperatur von 60 bis 110, bevorzugt von 90 bis 100°C. Es wird im allgemeinen bei Normaldruck gearbeitet.

Die wässerigen Lösungen oder Suspensionen, die umgesetzt werden, weisen üblicherweise eine Wassergehalt von 30 bis 60 Gew.-% auf.

Im allgemeinen wird die Umsetzung so lange durchgeführt, bis ein Ausgangsmelaminharz bzw. ein elastifiziert Melaminharz entstanden ist, das eine Trübungstemperatur von 50 bis 60 entstanden ist. Diese Umsetzungsprodukte weisen als 55 gew.-%igen wäßrige Lösungen bei einer Temperatur von 20°C und einer Schergeschwindigkeit von 100s⁻¹ üblicherweise eine Viskosität von 50 bis 200, bevorzugt 80 bis 100 mPa·s auf. Unter den genannten Reaktionsbedingungen sind hierfür im allgemeinen Reaktionszeiten von 90 bis 200 min erforderlich.

Die Umsetzung kann beendet werden, indem man die Reaktionsmischungen auf Temperaturen unterhalb 50°C, bevorzugt auf 20 bis 30°C abgekühlt.

Bei der zweistufigen Methode I wird das in Stufe Ia hergestellte Ausgangsmelaminharz mit der Komponente (c) vermischt. Die Vermischung ist unkritisch und erfolgt beispielsweise, indem man die Komponente (c), z.B. in Form einer wässerigen Lösung, in das Ausgangsmelaminharz einrührt.

Im allgemeinen werden wässerigen elastifizierte Melaminharze gewünscht, besonders solche mit einem Feststoffgehalt von 40 bis 60 Gew.-%. Sofern die Melaminharze nicht schon unmittelbar nach ihrer Herstellung mit dem gewünschten Feststoffgehalt vorliegen, ist es möglich, den Feststoffgehalt durch Abdestillieren von Wasser, vorzugsweise im Vakuum, oder durch Vermischung mit Wasser zu verändern. Weiterhin ist es möglich, die wässerigen Lösungen der Melaminharze durch Sprühtrocknung zu Pulvern weiterzuverarbeiten. Diese Pulver sind leicht mit üblichen Methoden, z.B. Einrühren in Wasser, redispergierbar.

Ansonsten erfolgt die Herstellung der Melaminharze vorzugsweise nach den allgemein üblichen Verfahren, die beispielsweise aus Ullmanns Encyklopädie der technischen Chemie, 4. Auflage, Band 7, S. 403 bis 422 bekannt sind.

Die Melaminharze eignen sich als Imprägnierstoffen vor allem zur Herstellung von Melaminharz-Imprägnaten.

Zu deren Herstellung werden Papiere, sogenannte Tränkpapiere, z.B. Dekor- und Kernlagenpapiere (Natronkraftpapiere), mit den Melaminharzen imprägniert. Dabei kommen die Melaminharze in Form einer 40 bis 70 gew.-%igen wässerigen Lösung zur Anwendung, der üblicherweise ein Härter zugesetzt wird.

Als Härter kommen Brønstedt-Säuren wie organische Sulfon- und Carbonsäuren sowie deren Anhydride, z.B. Maleinsäure, Maleinsäureanhydrid und Ameisensäure, Ammoniumverbindungen, z.B. Ammoniumsulfat, Ammoniumsulfit, Ammoniumnitrat, Ethanolaminhydrochlorid, Dimethylethanolammoniumsulfit sowie Härterkombinationen wie Morpholin/p-Toluolsulfonsäure in Betracht.

Die Härter können in Mengen von 0,1 bis 2,5 Gew.-%, bezogen auf das wäßrige Tränkharz, zugegeben werden. Dem Fachmann ist bekannt, daß die Härterdosierung den jeweiligen anwendungstechnischen Erfordernissen angepaßt werden kann, wobei die Reaktivität der Tränkharz/Härter-Gemische z.B. über die Messung der Trübungszeiten und Gelierzeiten entsprechend eingestellt werden kann.

Den Imprägnierflotten können zusätzlich Hilfsmittel wie Netzmittel zugesetzt werden. Als Netzmittel eignen sich zum Beispiel ethoxylierte Fettalkohole oder Alkylphenolethoxylate, die in Mengen von 0,2 bis 0,6 Gew.-%, bezogen auf die Harzlösung, zugesetzt werden können.

Es erübrigt sich meistens, zur Verbesserung der anwendungstechnischen Eigenschaften der Melaminharze, z.B. der Reaktivität und der Flexibilität der Papierfolien, vor, während oder nach der Herstellung in wirksamen Mengen bekannte Modifizierungsmittel wie ε-Caprolactam und andere Carbonsäureamide (vgl. "deutsche Auslegeschrift 1 595 368), Sulfonsäureamide wie Toluolsulfonsäureamid, Sacchariden (DE-A-21 44 534) sowie Thioharnstoff zuzusetzen.

Es hat sich jedoch bewährt, Melaminharze einzusetzen, die Mischungen des Adduktes (C) und der genannten bekannten Modifizierungsmittel enthalten, einzusetzen, wenn besonders hohe Anforderungen an die Härte der Beschichtungen gestellt werden. Diese erfindungsgemäßen Melaminharze enthalten bevorzugt 2 bis 6 Gew.-% des Adduktes (C) und 0,1 bis 4 Gew.-% der genannten bekannten Modifizierungsmittel, jeweils bezogen auf die Komponenten (a) und (b).

Die Art und Weise, wie die Imprägnierflotten zu Melaminharz-Imprägnaten weiterverarbeitet werden und wie die Beschichtung der Holzwerkstoffe mit diesen Imprägnaten erfolgt, ist dem Fachmann bekannt.

Verfahren, wie die Imprägnierflotten zu Melaminharz-Imprägnaten, die aus mehreren übereinanderliegenden Papieren aufgebaut sind, z.B. sog. Hochdruck-Laminaten (HPL) und kontinuierlich hergestellten Laminaten (CPL) weiterverarbeitet werden können, sind beispielsweise in der DE-A-41 39 961 und der DE-A-42 40 982 beschrieben.

Diese Laminate werden üblicherweise mit Klebstoffen auf Holzwerkstoffe aufgeleimt.

Die Melaminharze eignen sich besonders für die Herstellung von Holzwerkstoffen, die mit aus einer Papierlage bestehenden Imprägnaten beschichtet sind.

Die Herstellung dieser Oberflächenbeschichtung erfolgt üblicherweise nach dem folgenden Verfahren: Dekorpapiere mit Flächengewichten im Bereich von 60 bis 150 g/m² werden mit 120 bis 150 Gew.-%, bezogen auf das Papiergewicht, der Imprägnierflotte imprägniert. Das imprägnierte Papier wird anschließend bis auf einen Restfeuchtegehalt von ca. 5 bis 7 Gew.-% getrocknet. Die auf diese Weise hergestellten Imprägnate werden anschließend nach dem Kurztaktverfahren bei Temperaturen von 150 bis 210°C und Drücken von 15 bis 30 bar während einer Preßzeit von 10 bis 60 s mit dem Holzwerkstoff verpreßt.

Die erfindungsgemäßen Melaminharze zeichnen sich insbesondere dadurch aus, daß mit ihnen auf wirtschaftliche Art und Weise hochwertige Melaminharz-Filme hergestellt werden können. Durch Aufpressen dieser Filme auf Werkstoffe aus unterschiedlichen Materialien wie Holz, Kunststoffe, Faserverbundstoffe oder insbesondere Holzwerkstoffe, z.B. Sperrholz, Holzfaserplatten und insbesondere Spanplatten erhalten diese eine Oberfläche, die rißbeständig, glänzend und unempfindlich gegen Wasserdampf ist.

### Beispiele

### Herstellung der Melaminharze

### Beispiel 1

zu einer Mischung aus 1137 g einer 40-gew.-%igen wäßrigen Formaldehydlösung (entspricht 15,2 mol Formaldehyd), 537 g voll entsalztem Wasser, die mit 2 n Natronlauge auf einen pH von 8,6-8,9 eingestellt worden war, wurde bei einer Temperatur von 30°C 1232 g Melamin (9,8 mol) gegeben. Die Mischung wurde bei einem pH-Wert von 8,7-8,9 und einer Temperatur von 98 bis 100°C für 120-150 min. gerührt, wonach sich eine klare Lösung mit einer Trübungstemperatur von 50°C gebildet hatte. Während des Abkühlens wurden bei ca. 70 bis 90°C 174,6 g eines Umsetzungsprodukts aus Natriumsulfit mit einem Äquivalent Ethylenoxid zugegeben.

Bei der Ermittlung der Trübungstemperatur werden die Lösungen mit Wasser auf 12 Gew.-% verdünnt, auf 100°C erwärmt und anschließend mit einer Geschwindigkeit von 5°C pro Minute unter Rühren abgekühlt. Als Trübungstemperatur gilt die Temperatur, bei der sich die in einer Schichtdicke von 1 cm für das Auge klare Lösung einzutrüben beginnt.

### Beispiel 2

Zu einer Mischung aus 1230 g einer 40-gew.-%igen wäßrigen Formaldehydlösung (entspricht 16,4 mol Formaldehyd), 230 g voll entsalztem Wasser, die mit 2 n Natronlauge auf einen pH von 8,6-8,9 eingestellt worden war, wurde bei einer Temperatur von 30°C 1377 g Melamin (10,9 mol) gegeben. Die Mischung wurde bei einem pH-Wert von 8,7-8,9 und einer Temperatur von 98 bis 100°C für 120-150 min. gerührt, wonach sich eine klare Lösung mit einer Trübungstemperatur von 50°C gebildet hatte. Während des Abkühlens wurden bei ca. 70 bis 90°C 174,6 g eines Umsetzungsprodukts aus Natriumsulfit mit einem Äquivalent Ethylenoxid zugegeben.

### Beispiel 3

Es wurde analog Beispiel 1 vorgegangen, jedoch wurden 87,3 g eines Umsetzungsproduktes aus Natriumsulfits und einem Äquivalent Ethylenoxid und 116,4 g Diethylenglykol in der Abkühlphase zugesetzt.

### Beispiel 4

Es wurde analog Beispiel 2 vorgegangen, jedoch wurden 129,7 g eines Umsetzungsproduktes aus Natriumsulfit und einem Äquivalent Ethylenoxid und 129,7 g Diethylenglykol in der Abkühlphase zugesetzt.

### Beispiel 5

Es wurde analog Beispiel 1 vorgegangen, jedoch wurden 116,4 g eines Umsetzungsproduktes aus Natriumsulfit und einem Äquivalent Ethylenoxid in der Abkühlphase und 58,2 g Dicyandiamid zu Beginn der Reaktion zugesetzt.

### Beispiel 6

Es wurde analog Beispiel 2 vorgegangen, jedoch wurden 129,7 g eines Umsetzungsproduktes aus Natriumsulfit und einem Äquivalent Ethylenoxid zugesetzt.

### Beispiel 7

Es wurde analog Beispiel 2 vorgegangen, jedoch wurden 97,3 g eines Umsetzungsproduktes aus Natriumsulfit und einem Äquivalent Ethylenoxid und 97,3 g Diethylenglykol in der Abkühlphase zugesetzt.

### Vergleichsbeispiel 1

Es wurde analog Beispiel 1 vorgegangen, jedoch wurden 116,4 g Caprolactam und 116,4 g Diethylenglykol in der Abkühlphase zugesetzt.

### Vergleichsbeispiel 2

Es wurde analog Beispiel 2 vorgegangen, jedoch wurden keine zusätzliche Modifizierungsmittel verwendet

### Vergleichsbeispiel 3

Es wurde analog Beispiel 1 vorgegangen, jedoch wurden keine zusätzlichen Modifizierungsmittel verwendet

### Vergleichsbeispiel 4

Es wurde analog Beispiel 1 vorgegangen, jedoch wurden 174,6 g einer Polyetherdiolmischung mit einem Molgewicht von 400 g/mol mittleren (p 400) in der Abkühlphase zugesetzt.

Eine Übersicht über die jeweiligen Zusammensetzungen der in den Herstellungsbeispielen 1 bis 7 bzw. V1 bis V3 beschriebenen Melaminharze gibt Tabelle 1

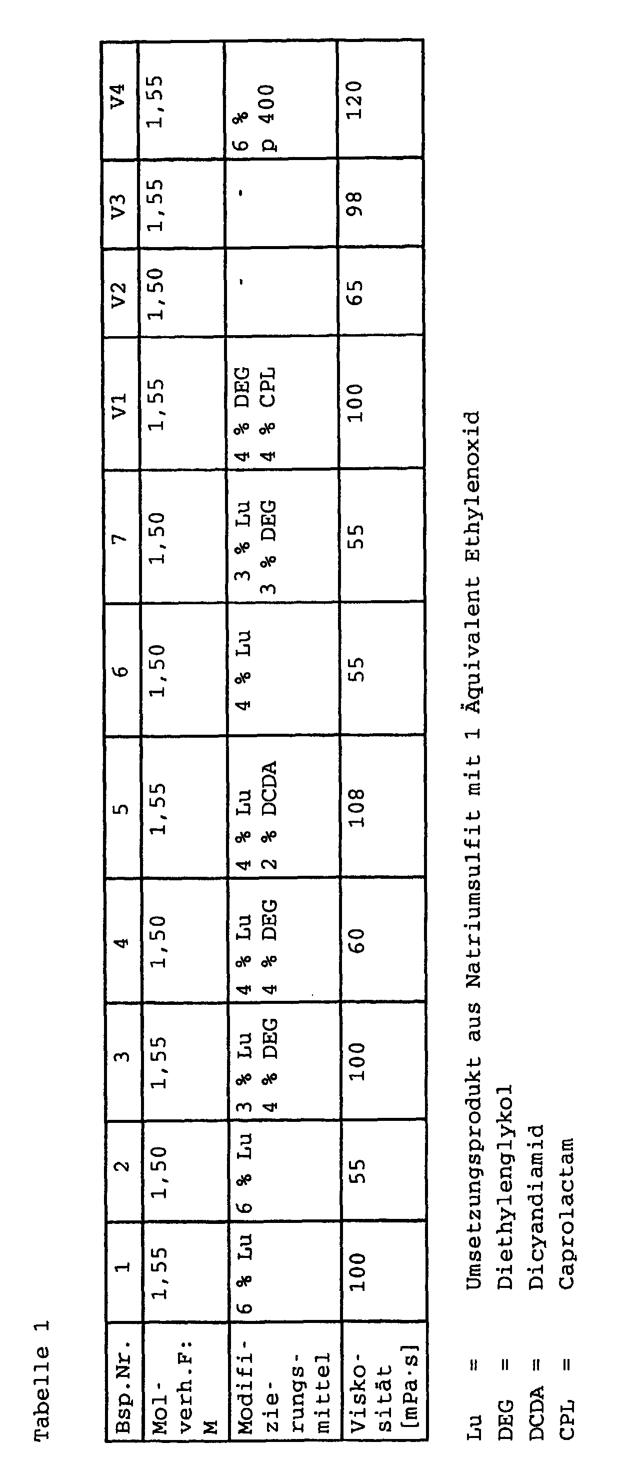

Herstellung der Melaminharz-Filme und mit diesen Filme beschichteten Spanplatten nach dem Kurztaktverfahren:

Zur Herstellung der Imprägnierflotte wurde das jeweilige Harz mit Wasser auf einen Feststoffgehalt von 55 Gew.-% eingestellt und mit 0,3 Gew.-%, bezogen auf die Harzlösung, eines handelsüblichen Alkylphenolethoxylat-Netzmittels versetzt. Mit einer 70 gew.-%igen wäßrigen Lösung eines Härters (Salz aus p-Toluolsulfonsäure und Morpholin) wurde eine Trübungszeit von ca. 5 min eingestellt.

Es wurden Dekorpapiere mit einem Flächengewicht von 80 g/m² imprägniert. Der Harzauftrag betrug ca. 120 %, der Restfeuchte-Gehalt wurde auf etwa 6,5 % eingestellt. Die so hergestellten Filme wurden nach dem Kurztaktverfahren mit 20 bar bei 190°C innerhalb von 35 s auf übliche beschichtungsfähige Spanplatten gepreßt.

### Anwendungstechnische Prüfung der beschichteten Spanplatten:

Die Prüfergebnisse sind in der nachstehenden Tabelle 2 wiedergegeben.

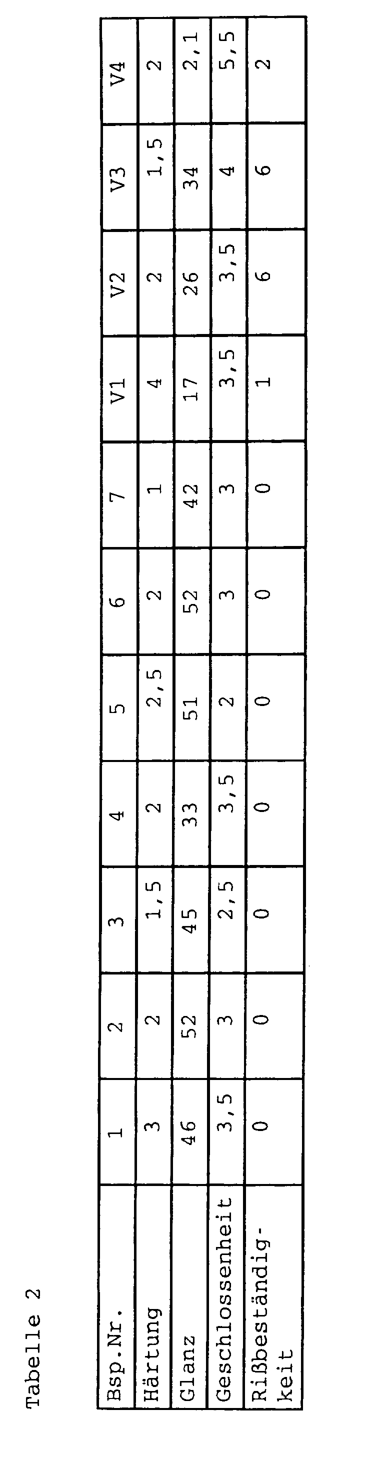

### Härtung

Die Güte der Härtung wird durch 16-stündige Einwirkung einer 0,2 n Salzsäure, die mit 0,004 Gew.-% Rhodamin B-Lösung angefärbt ist, auf die beschichtete Spanplatte ermittelt. Bei guter Härtung wird die Oberfläche nicht durch die Säure angegriffen. Die Stärke des Angriffs läßt sich anhand der Stärke der Rotfärbung beurteilen. Beurteilung
0 = kein Angriff
1 = schwache Rosafärbung
2 = deutliche Rotfärbung
3 = starke Rotfärbung
4 = starke Rotfärbung mit leichter Oberflächenquellung
5 = starke Rotfärbung mit starker Oberflächenquellung
6 = zerstörte Oberfläche

### Glanz

Die Glanzmessung erfolgt nach DIN 67 580 durch Reflexionsmessung eines Lichtstrahls im Einfallswinkel von 20°. Der Glanz ist umso besser, je höher der in % angegebene Anteil des reflektierten Lichtes ist.

### Geschlossenheit

Die Geschlossenheit oder Porigkeit der beschichteten Spanplatten-Oberfläche dient zur Beurteilung der Schmutzempfindlichkeit. Die zu prüfende Oberfläche wird mit schwarzer Schuhcreme eingerieben und anschließend mit einem Lappen wieder gereinigt. Die in den Poren verbleibende Schuhcreme ermöglicht eine Beurteilung der Geschlossenheit der Oberflächen.

Die Beurteilung der Oberflächengeschlossenheit erfolgt in folgenden Stufen:
0 = porenfrei
1 = vereinzelte Poren
2 = wenige Poren
3 = häufige Poren
4 = viele offene Stellen
5 = sehr viele offene Stellen
6 = keine Geschlossenheit.

### Rißbeständigkeit

Die Rißbeständigkeit einer Oberfläche wird nach DIN 53 799 bestimmt. Die beschichtete Spanplatte wird über einer Zeit von 24 h bei 70°C im Umlufttrockenschrank gelagert. Durch den Trocknungsprozeß treten Schrumpfspannungen auf, die in den Oberflächen zu einer Rißbildung führen. Eine Verschärfung des Tests kann durch Erhöhung der Trocknungstemperatur oder durch Anbohren der Oberfläche (Kerbwirkung) erreicht werden. Die Beurteilung der Rißbildung erfolgt nach folgender Skala:
0 = keine Risse
1 = vereinzelte kleine Risse
2 = wenige Risse
3 = mäßige Risse
4 = häufige Risse
5 = viele Risse
6 = totale Rißbildung.

### Feststoffgehalt

Der Feststoffgehalt wird ermittelt, indem 1 bis 2 g des Melaminharzes auf ein Trockenblech ausgegossen, zwei Stunden in einem Umluft-Trockenschrank bei 120°C getrocknet werden und die sich durch das Trocknen ergebende Gewichtsdifferenz gemessen wird.

## Patentansprüche

1. Elastifizierte Melaminharze aus
a) Melamin (Komponente a)
b) 1,4 bis 2,0 mol Formaldehyd pro Mol Melamin (Komponente b)
c) 0,5 bis 20 Gew.-%, bezogen auf die Gesamtmenge der Komponenten (a) und (b) eines Adduktes (c) aus
c1) einem Alkalisulfit, Alkalyhydrogensulfit oder Alkalidisulfit
und
c2) pro Mol Schwefel in der Komponente (C1) 1 bis 100 mol eines C₂- bis C₄-Oxirans,
wobei die bei der Bildung des Adduktes (c) entstehende Hydroxylgruppe mit einem C₁- bis C₂₀-Alkyl-, einem C₅- bis C₂₀-Cycloalkyl-, einem C₆- bis C₁₅-Aryl oder einem C₇- bis C₂₀-Aralkylrest verethert sein kann und
d) 0 bis 0,5 mol einer weiteren Verbindung (Komponente d), die fähig ist, mit Formaldehyd in einer Polykondensations-oder Polyadditionsreaktion zu reagieren, pro Mol Melamin.

2. Elastifizierte Melaminharze nach Anspruch 1, wobei es sich bei dem Addukt (c) um Verbindungen der allgemeinen Formel I 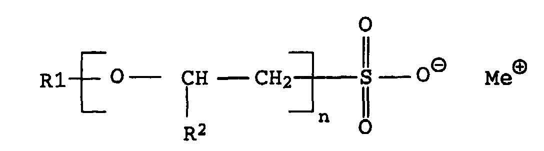 handelt, in der
R¹ Wasserstoff, C₁- bis C₂₀-Alkyl, C₅- bis C₂₀-Cycloalkyl, C₆- bis C₁₅-Aryl oder C₇- bis C₂₀-Aralkyl,
R² unabhängig voneinander Wasserstoff, Methyl oder Ethyl bedeutet und
n 1 bis 100
Me⊕ für ein Kalium- oder Natriumion steht.

3. Verfahren zur Herstellung von elastifizierten Melaminharzen nach Anspruch 1 oder 2 durch
Ia) Umsetzung einer wässerigen Lösung oder Suspension, enthaltend die Komponenten (a), (b) und gegebenenfalls (d) zu einem Ausgangsmelaminharz und
IIb)Vermischen des Ausgangsmelaminharzes mit der Komponente (c)
oder
II) Umsetzung einer wässerigen Lösung oder Suspension enthaltend die Komponenten (a), (b), (c) und gegebenenfalls (d).

4. Verfahren nach Anspruch 3, dadurch gekennzeichnet, daß man die Umsetzung bei einem pH-Wert von 7 bis 10 und einer Temperatur von 60 bis 110°C durchführt, bis die wäßrige Lösung bezogen auf einen Feststoffgehalt von 55 %, eine Viskosität von 40 bis 200 mPa·s (gemessen bei 20°C und einer Schergeschwindigkeit von 100s⁻¹) aufweist.

5. Verwendung der elastifizierten Melaminharze nach Anspruch 1 oder 2 zur Imprägnierung von Papier.

6. Melaminharz-Imprägnate, die mit den elastifizierten Melaminharzen nach Anspruch 1 oder 2 getränkt sind.

7. Holzwerkstoffe, die mit den Melaminharz-Imprägnaten nach Anspruch 6 beschichtet sind.

## Claims

1. An elasticized melamine resin comprising
a) melamine (component a)
b) from 1.4 to 2.0 mol of formaldehyde per mole of melamine (component b)
c) from 0.5 to 20% by weight, based on the total amount of components (a) and (b), of an adduct (c) of
c1) an alkali metal sulfite, alkali metal hydrogensulfite or alkali metal disulfite
and
c2) from 1 to 100 mol of a C₂- to C₄-oxirane per mole of sulfur in component (c1),
it being possible for the hydroxyl group produced in the formation of the adduct (c) to be etherified with a C₁- to C₂₀-alkyl, a C₅- to C₂₀-cycloalkyl, a C₆- to C₁₅-aryl or a C₇- to C₂₀-aralkyl radical, and
d) from 0 to 0.5 mol of a further compound (component d) which is capable of reacting with formaldehyde in a polycondensation or polyaddition reaction, per mole of melamine.

2. An elasticized melamine resin as claimed in claim 1, where the adduct (c) is a compound of the general formula I 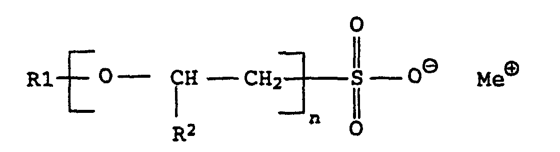 in which
R¹ is hydrogen, C₁- to C₂₀-alkyl, C₅- to C₂₀-cycloalkyl, C₆- to C₁₅-aryl or C₇- to C₂₀-aralkyl,
R² independently at each occurrence is hydrogen, methyl or ethyl, and
n is from 1 to 100 and
Me^{⊕} is a potassium or sodium ion.

3. A process for preparing elasticized melamine resins as claimed in claim 1 or 2 by
Ia) reacting an aqueous solution or suspension comprising components (a), (b) and, if used, (d) to form an initial melamine resin and
IIb) mixing the initial melamine resin with component (c)
or
II) reacting an aqueous solution or suspension comprising components (a), (b), (c) and, if used, (d).

4. A process as claimed in claim 3, wherein the reaction is conducted at a pH from 7 to 10 and a temperature from 60 to 110°C until the aqueous solution has a viscosity, based on a solids content of 55%, of from 40 to 200 mPa·s (measured at 20°C and a shear rate of 100 s⁻¹).

5. The use of elasticized melamine resins as claimed in claim 1 or 2 to impregnate paper.

6. An article impregnated with the elasticized melamine resins as claimed in claim 1 or 2.

7. A woodbase material coated with the melamine resin-impregnated articles as claimed in claim 6.

## Revendications

1. Résine de mélamine élastifiée formée à partir de
a) mélamine (composant a)
b) 1,4 à 2,0 moles de formaldéhyde par mole de mélamine (composant b)
c) 0,5 à 20% en poids, par rapport à la quantité totale des composants (a) et (b), d'un adduit (c) formé à partir de
c1) un sulfite de métal alcalin, un hydrogénosulfite de métal alcalin ou un bisulfite de métal alcalin, et
c2) 1 à 100 moles d'un oxirane en C₂-C₄, par mole de soufre dans le composant (c1),
où les groupements hydroxyle formés lors de la synthèse de l'adduit (c) peuvent être ethérifiés à l'aide d'un reste alkyle en C₁-C₂₀, cycloalkyle en C₅-C₂₀, aryle en C₆-C₁₅ ou aralkyle en C₇-C₂₀ et
d) 0 à 0,5 mole, par mole de mélamine, d'un autre composé (composant d), susceptible de réagir avec le formaldéhyde dans une réaction de polycondensation ou de polyaddition.

2. Résine de mélamine élastifiée selon la revendication 1, pour laquelle l'adduit (c) est constitué de composés de formule générale I 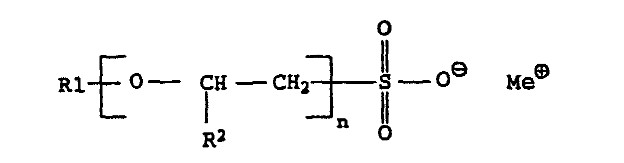 dans laquelle
R¹ représente un atome d'hydrogène, un groupement alkyle en C₁-C₂₀, cycloalkyle en C₅-C₂₀, aryle en C₆-C₁₅, ou aralkyle en C₇-C₂₀,
R² représentent indépendamment les uns des autres, un atome d'hydrogène, un groupement méthyle ou éthyle et
n vaut 1 à 100,
Me^{⊕} est mis pour un ion sodium ou potassium.

3. Procédé de préparation de résines de mélamine élastifiées selon la revendication 1 ou 2 par
Ia) réaction d'une suspension ou d'une solution aqueuse, contenant les composants (a), (b) et éventuellement (d) en une résine de mélamine de départ et
IIb) mélange de la résine de mélamine de départ avec le composant (c),
ou
II) réaction d'une suspension ou d'une solution aqueuse, contenant les composants (a), (b), (c) et éventuellement (d).

4. Procédé selon la revendication 3, caractérisé en ce que l'on mène la réaction à une valeur de pH de 7-10 et à une température de 60-110°C, jusqu'à ce que la solution aqueuse présente, pour une teneur en extrait sec de 55%, une viscosité de 40-200 mPa.s (mesurée à 20°C et pour une vitesse de cisaillement de 100s⁻¹).

5. Utilisation d'une résine de mélamine élastifiée selon la revendication 1 ou 2 pour l'imprégnation de papier.

6. Produits d'imprégnation par une résine de mélamine qui ont été imprégnés avec une résine de mélamine élastifiée selon la revendication 1 ou 2.

7. Pièces en bois revêtues avec les produits d'imprégnation par une résine de mélamine selon la revendication 6.
